# EUROPEAN PATENT SPECIFICATION

(11) **EP 4 061 664 B1**
(45) Date of publication and mention of the grant of the patent: **21.02.2024**
(21) Application number: 20811770.5
(22) Date of filing: 18.11.2020
(51) Int. Cl.: B60K 15/03, B60K 15/063, B62D 53/04, B60K 15/07

(54) **A SYSTEM FOR STORING PRESSURISED FUEL ON A TRUCK**
SYSTEM ZUM LAGERN VON UNTER DRUCK STEHENDEM KRAFTSTOFF AUF EINEM LASTKRAFTWAGEN
SYSTÈME PERMETTANT DE STOCKER DU CARBURANT SOUS PRESSION SUR UN CAMION

(30) Priority: 20.11.2019 NL 2024273
(43) Date of publication of application: 28.09.2022
(73) Proprietor: DAF Trucks N.V., 5643 TW Eindhoven (NL)
(72) Inventor: VAN DER KNAAP, Albertus Clemens Maria, 5643 TW Eindhoven (NL); WEIJENBORG, Bernardus Johannes Maria, 5643 TW Eindhoven (NL)
(74) Representative: V.O.
(86) International application number: PCT/NL2020/050721
(87) International publication number: WO 2021/101374

(56) References cited:
- WO-A1-2015/191918
- WO-A1-2016/126958
- WO-A1-2018/217835
- DE-A1-102010 044 035
- DE-B4-102010 044 035
- US-A1- 2017 313 179
- US-B1- 9 751 399

## Description

### BACKGROUND OF THE INVENTION

The invention relates to vehicles with alternative fuel sources, in particular vehicles using pressurised fuel sources such as hydrogen gas, liquid hydrogen or other fuels in gas or liquid form.

Of particular interest are heavy load vehicles such as trucks. Trucks in general are used to transport heavy loads over long distances. Particularly in case of heavy duty long haul applications so-called tractor semi-trailer combinations are used in which the tractor vehicle pulls and partly supports the payload that is packed onto the semi-trailer. The connection between the tractor and the semi-trailer is established by a cardanic joint, called "fifth wheel", which provides for two rotational degrees of freedom between the two elements of this articulated vehicle combination setup. These two rotations are defined as yaw in the horizontal plane (related to cornering manoeuvres) and pitch in the vertical plane (related to driving over changing road slopes, e.g. ramp up and ramp down).

The long travelling distances of these typical long haulage tractor semi-trailer combinations require large amounts of fuel on board of the vehicle. Especially when alternative fuel sources are used such as hydrogen, the ability to carry sufficient quantities of fuel becomes even more important due to the fairly poor volumetric energy density in comparison to conventional fossil fuels (like diesel). To increase the volumetric energy density of these hydrogen based fuels normally gaseous hydrogen is pressurized and put into robust thick walled cylindrical container units that can withstand these high internal pressures. Pressure ranges typically from several bars in cryogenic (partly liquid) conditions, to about 350-700 bar for storage of gaseous hydrogen at room temperature.

In Europe the total length of the tractor semi-trailer combination is currently restricted to 16,5 m and the allowed distance of the back of the semi-trailer to the king pin (which connects to the fifth wheel) is maximized at 12 m. Furthermore the front radius of the semi-trailer has to be limited to 2040 mm to avoid that too large semi-trailer structure sways out of the pulling tractor toward the outside curve during cornering (e.g. at roundabouts). The centre of this front radius circular packaging space contour coincides with the location of the fifth wheel. This valuable available space between the fifth wheel and the back of the cabin may be used to package and store payload on the semi-trailer and consequently loading the driven rear axle of the tractor. Hence limited space is available at the tractor to install the cabin compartment (in front of the semi-trailer), driveline components and fuel tanks. The more optimally the vehicle layout design utilizes the available space, the higher the payload amount maybe.

WO2015191918 describes a conventional fuel tank enclosure mounted behind a tractor cab. In DE102017011032, a solution is described where pressurized hydrogen fuel vessels are placed between the wheels of the semi-trailer of a truck in order to carry sufficient hydrogen for achieving a substantial driving range. The pressure vessels extend beyond the wheels in a direction of travel of the semi-trailer and are surrounded by a U shape frame. The U shape frame tapers toward the kingpin of the semi-trailer. The teaching has multiple disadvantages in terms of complexity, costs, system weight, vehicle roll stability, risk on leakage of hydrogen, etc..., The vessels, fuel and/or U frame may cause an increase in the total mass of the semi-trailer as the U-frame shaped carrier is not a stiff construction structure by nature. Hence the semi-trailer may deflect under the weight of the payload and additional hydrogen tanks if the frame is not strengthened. The increased mass of the semi-trailer adds static loads as well as dynamic loads to the semi-trailer. Dynamic loads may cause premature failure of the semi-trailer structure as the mass flexes the semi-trailer during transportation. To prevent these large deflections or flexing (which may cause the trailer to crack and ultimately fail due to fatigue), the semi-trailer needs to be even further strengthened which further increases the mass. Mass increases of the semi-trailer (= sum of empty weight and cargo) adds to roll instability of the semi-trailer when no appropriate roll stabilization system is applied. According to the embodiment as described in DE 102017011032 the installation of a fairly simple conventional roll stabilizer means (which requires an interconnection between left and right wheels) is hindered by the placement of big cylindrical pressure vessels between the wheels of the semi-trailer. A further disadvantage of this referred state-of-the-art is that in order to reach a substantial driving range (as typically needed for long haulage transport of goods) the pulling tractor becomes dependent on specific semi-trailers to provide the amount of fuel to travel over these long distances without making intermediate stops for refuelling. This dependency strongly limits the flexibility of the logistic process and has a negative impact on the business model of a tractor which ideally should be an autonomous workhorse that can pull almost any semi-trailer.

It is an objective of the claimed invention to solve one or more problems faced in the state of the art.

### SUMMARY OF THE INVENTION

The invention provides for solving or improving at least one of the disadvantages of the prior art by providing a truck or tractor semi-trailer combination interconnected via a fifth wheel, comprising a cabin and a pressurized fuel storage for storing sufficient pressurized fuel on board of the pulling tractor to reach a substantial driving range. The pressurized fuel storage is situated between a rear end of the cabin and the semi-trailer and is formed by a dense pack of a contiguous or closely packed plurality of cylinder vessels, the cylinder vessels having uniform diameters configured in a rectangular or triangular configuration, the dense pack extending in height above the fifth wheel, wherein the pressurized fuel storage is confined by the rear boundary of the cabin and a rear side of the storage, characterized in that the rear side of the storage has a perimeter that recedes with increasing height, to provide for a forward inclination of the semi-trailer relative to the fifth wheel, defined by a pitch degree of freedom, between the semi-trailer and a rear boundary of the cabin. The said position and dimensioning in a such a pack of a plurality of cylinder vessels allows for said pressurized fuel storage to be installed in the tractor, possibly in addition with further pressurized fuel vessels, such that a long haul truck can cover travel ranges between 300 and 1000 km. A further objective of the invention is to maximise the hydrogen filling ratio in the pressurized fuel storage space between the cabin and the semi-trailer. This can be achieved by increasing the number of uniform cylinders through varying cylinder dimensions, i.e. diameter, length and orientation, of the proposed pressure vessels and is described in further detail in the multiple embodiments of this invention.

With said perimeter it is indicated that the fuel storage has an end form, rearwards of the cabin, that corresponds to the degree of freedom that is allowed by the semi-trailer. In particular, it conforms to the pitch degree of freedom. In a preferred mode, the pressurized fuel storage has a largest length dimension along a length direction of the truck or tractor semi-trailer combination, that is larger than a smallest distance, conforming to a rotational yaw degree of freedom, between the semi-trailer and a rear boundary of the cabin, measured in a vertical plane through the centreline of the truck. The invention advantageously utilizes the outer side and upper zones of the truck, near the rear end corner of the cabin, and above a plane formed by the fifth wheel, to store additional pressurized fuel, without limiting the yaw and pitch degree of freedom of the semi-trailer.

The invention will further be elucidated by description of some specific embodiments thereof, making reference to the attached drawings. The detailed description provides examples of possible implementations of the invention, but is not to be regarded as describing the only embodiments falling under the scope. The scope of the invention is defined in the claims, and the description is to be regarded as illustrative without being restrictive on the invention.

### BRIEF DESCRIPTION OF FIGURES

Figure 1 shows a perspective view of a tractor with a pressurized fuel storage with dense packs of cylinder vessels behind the cabin and along the chassis members according to a preferred embodiment of the invention.
Figure 2 (A + B) shows a top view of an embodiment of the invention with a confined pressurized fuel storage and with a dense pack of cylinders with an rectangular alignment
Figure 3 shows a perspective view of an embodiment of the invention with a storage compartment.
Figure 4 (A +B) shows two embodiments of the invention of dense packs of vertically placed cylinders in a rectangular and a triangular alignment.
Figure 5 shows a top view of a preferential layout of a tractor having a plurality of pressure vessels; an e-axle; a battery pack and fuel cells.
Figure 6 (A + B) shows a comparison of a pressurized fuel storages, one consisting of three big pressure vessels and the other one consisting of a dense pack of cylinder vessels with vertical and rectangular alignment.
Figure 7 (A + B) shows two further embodiments of pressurized fuel storages with dense packs of cylinder vessels, one with cylinders placed in lateral orientation and the other one in longitudinal orientation.

### DETAILED DESCRIPTION

The invention provides for a tractor 1 with a cabin 2 and at least one elongated pressure vessel 3 for storing pressurised fuel. The pressurised fuel may include any liquid or gaseous fuel, in particular hydrogen fuel.

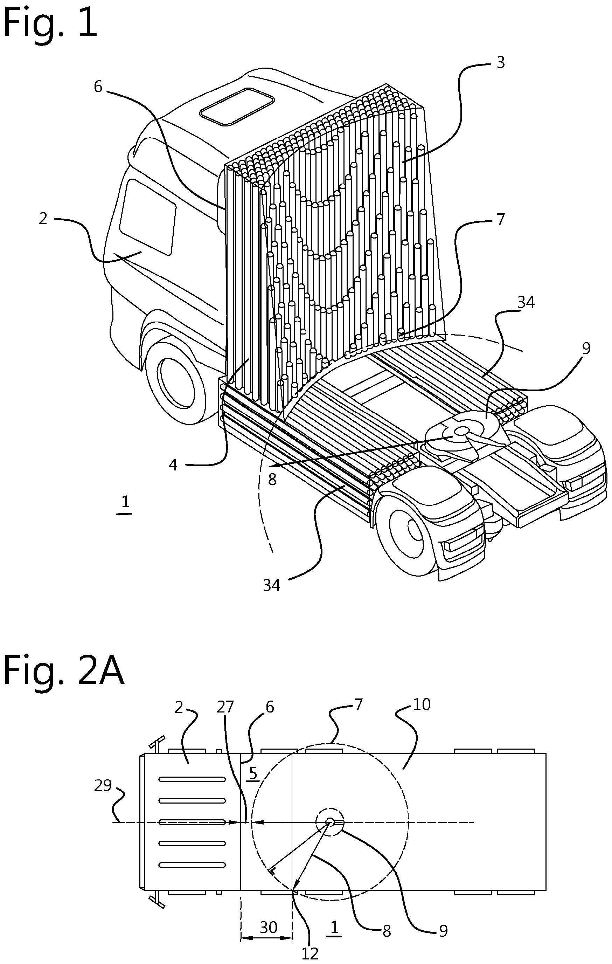

In Figure 1 a truck 1 is shown having a fifth wheel 9 and a cabin 2. A pressurized fuel storage 4 is situated between a rear end of the cabin 2 and the semi-trailer. The pressurized fuel storage 4 is formed by a dense pack of a plurality of cylinder vessels 3. The term "dense" has a well-recognized meaning, indicating that the cylinder vessels are closely packed into a dense configuration, that is, about contiguous, or with no substantial room between the vessels, other than possibly an isolating layer, a mechanical connector or some interspacing to allow for mechanical stress relief. The cylinder vessels 3 have uniform diameters configured in a rectangular or triangular configuration, the fuel storage 4 extending in height above the fifth wheel 9. The pressurized fuel storage 4 is confined by the rear boundary of the cabin 2 and a rear side of the storage 4, that has a perimeter 7 that recedes with increasing height. Thus, the storage has a tilted rear side that provides for a forward inclination of the yawing semi-trailer relative to the fifth wheel, defined by a pitch degree of freedom, between the semi-trailer and a rear boundary of the cabin. To maximize the available space between the rear boundary of the cabin and the front end of the semi-trailer the wheelbase (distance between front and rear axle) of the tractor may be enlarged (typically up to 4 m for the use case of front wheel steered tractors and in relation to current legal turning circle requirements) and the distance between fifth wheel and rear axle may be reduced (typically down to a value between 400 and 450 mm). Note that this proposed layout configuration needs to fulfil the legally allowed boundaries set to masses and dimensions of European tractor semi-trailers combinations. Also the application of a relatively compact cabin (in length direction; specifically having the rear boundary located at a distance smaller than 880 mm behind the location of the front axle) contributes to maximization of free packaging space for installation of additional pressurized hydrogen tanks behind the cabin. Also the implementation of local cavities into the contours of the cabin rear boundary and next to the installed pressure vessel may help in optimisation of free packaging space and consequently increasing the amount of fuel that can be carried on board of the tractor.

The fuel storage is thus confined within the rear boundary of the cabin and perimeter 7. The said perimeter 7 follows a radius 8 from a fifth wheel 9, allowing the semi-trailer 10 to turn relative to the fifth wheel 9 without colliding with the cabin during cornering manoeuvres of the tractor semi-trailer combination. The pressurized fuel storage is provided by packed cylindrical vessels 3 aligned in upward direction of the truck 1; wherein a height of the cylindrical vessels decreases towards the rear side of the pressurized fuel storage, adjusted to the perimeter 7 of said rear side of the pressurized fuel storage 4. With "upward direction", it is indicated that the axial direction of the vessels 3 of the dense packed fuel storage 4 are generally in vertical direction, with angle inclinations that range from 0 degrees up to 15-20 degrees relative to the vertical axis of the truck.

Furthermore, additional elongated pressure vessels 34, needed for reaching a driving range of more than 800 km or more, may be provided in the bottom framework (or chassis) of the tractor, in particular, in a space provided between front and rear wheels and at the outside (in parallel to the longitudinal centreline of the tractor) where normally, in conventional combustion engine driven trucks, the diesel tanks and the exhaust aftertreatment system are installed.

Figure 2 A shows a pressurized fuel storage with a corresponding confining perimeter 7 that extends beyond a radius 8 larger than a spanning distance from a fifth wheel 9 at a centre point to a corner 12 of the semi-trailer 10. Consequently the available storage space for fuel storage 5 has a maximum length dimension 30 which is measured in length direction of the truck and that is defined by the distance between the rear cabin contour 6 and the perimeter 7 at the outer sides of the tractor semi-trailer combination.

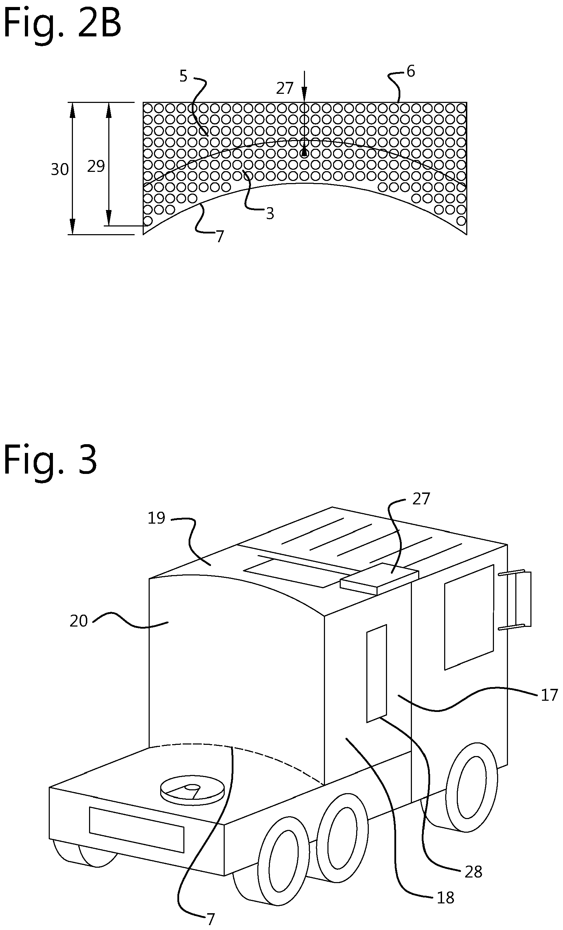

In order to fill up the available storage space in Figure 2B a detail of the embodiment of Figure 2A is shown for a dense pack of packed cylindrical vessels 3 having uniform diameters and being aligned in upward direction of the truck 1 with a rectangular distribution over the space that is confined with the perimeter 7 of said rear side of the pressurized fuel storage 4. The pack is positioned near or at the rear boundary 6 of the cabin. Any number of spherocylindrical pressure vessels 3 may be comprised in the pressurized fuel storage 5 provided they do not protrude past the perimeter 7. The resulting pressurized fuel storage 5 has a largest length dimension 29 along a length direction of the truck or tractor semi-trailer combination (in case of the embodiment of Figure 2B this length dimension is determined by the longitudinal array of cylinders at the outer sides in the rectangular configuration of pressure vessels 3) that is larger than a first distance 27 (shown in Figure 2A, B), the first distance 27 being the smallest distance that occurs, under impact of relative roll, pitch and/or yaw motions between the (secondary suspended) cabin and (primary suspended) semi-trailer, between a semi-trailer 10 (shown in Figure 2A) and the rear boundary of the cabin 6. The smallest distance 27 is typically measured at centreline 29 of the truck. The largest length dimension 29 is smaller than or equal to the length dimension 30 of the available storage space.

The perimeter 7 primarily allows a semi-trailer 10 to turn with large yaw angles (typically up to ±90 degrees or more) relative to the fifth wheel 9 when a tractor with a semi-trailer is steered through corners (e.g. low speed manoeuvring or taking roundabouts). Furthermore, during driving over changing slopes, the semi-trailer may pitch forward relative to the tractor (or vice versa the tractor pitches backwards relative to semi-trailer). This relative pitching motion (which is typically limited via end stops on the fifth wheel to ±6 degrees) further reduces the available free packaging space between the cabin and the semi-trailer. The relative pitching motion can even be further deteriorated by considering a condition of braking or accelerating on undulated road slopes. The cabin is suspended with springs and dampers to the chassis of the tractor. When the truck accelerates this may cause additional pitch angles that are superposed on the major relative semi-trailer pitch angles caused by driving over changing road slopes. The ladder frame based chassis of the tractor is usually fairly flexible in torsional direction, meaning that when driving off on a gradient may give rise to relative roll motions between cabin and semi-tractor und the impact of driving torque generated by a chassis mounted motor which twists the chassis and excites the secondary suspension of the cabin. Also centrifugal forces acting on the cabin while driving through corners may give rise to relative roll motions between the suspended cabin and semi-trailer. It has to be avoided that during traveling the semi-trailer comes into contact with the tractor other than the contact provided by the fifth wheel connection that is construed in the form of a cardanic joint allowing for pitch and yaw articulation between the tractor and the semi-trailer. Contact between the trailer and the tractor may lead to obstruction and/or damage of the truck. The radius 8 is at least equal to the spanning distance from the fifth wheel 9 to a front corner 12 of the semi-trailer 10 of the truck 1. The corresponding perimeter 7 is defined by this trailer's 10 outermost point that is rotating around the fifth wheel 9 and travelling over this perimeter contour at the interface between the semi-trailer 10 and the cabin 2 during turning. The distance from the fifth wheel 9 to the front corner 12 of the semi-trailer thus represents the boundary for the minimum clearance required. Should the semi-trailer 10 pitch forward relative to the cabin 2 during accelerating, braking and/or driving over changing road slopes then the perimeter, indicated by radius 8, moves forward for higher (in vertical direction) parts of the semi-trailer and cabin constructions and consequently a larger clearance space must be reserved to accommodate for the semi-trailer 10 that is relatively leaning forward to the tractor. It also possible that the perimeter 7 is defined with a radius 8 that is slightly larger than the distance from the fifth wheel 9 to a front corner 12 of the semi-trailer of the truck which a matter of preference or situational requirements (e.g. for providing a bit more clearance to be robust against assembly manufacturing tolerances and/or local high frequency vibrations of construction parts). The fuel storage 5 is provided in the available free space between the cabin 2 and semi-trailer 10 and is limited by the rear boundary 6 of the cabin and the (pitched) perimeter 7. This is to avoid obstruction of the trailer 10 motion during turning, braking, accelerating and/or driving over changing road slopes. The pressurized fuel storage 5' or pack of spherocylindrical pressure vessels 3 may not protrude past the perimeter 7.

In Figure 3 an embodiment of the invention is shown with the storage compartment 17 construed by panels along the side 18 and/or top surface 19 of truck 1. The storage compartment 17 may also have a rear panel 20 along the perimeter 7, that is to say that the rear panel follows the perimeter. The storage compartment 17 may be construed by any combination of the panels, that is to say that the storage compartment 17 may be construed by only one of the mentioned panels or all of the panels or any combination in between. Forming the storage compartment 17 with panels 18,19,20 may serve more than one purpose. Panels may be used to reduce the aerodynamic drag of the storage compartment 17 by preventing travel air from being sucked into the storage compartment 17. These panels 18,19,20 may have streamlined forms which help guide the travel air past the storage compartment 17 and along the outer surface of the truck. By using panels 18,19,20 to form the storage compartment 17 the pressure vessels may also be protected from direct solar heat radiation.

Figure 3 further shows that the storage compartment 17 may have a cooling system 27 for cooling the pressurized fluid in vessels 3,14 (shown in Figure 2) that may at least be partially contained in the storage compartment 17. The cooling system 27 may include ventilation openings 28 which may utilize natural convection to remove heat and/or travel air flow to allow cool air to enter the storage compartment 17. The cooling system 27 may also be any other known cooling system such as a forced evaporation cooling system, refrigeration system or heat pump system but is not limited to these systems. Since the temperature of a pressurized fuel may determine the internal pressure of the spherocylindrical pressure vessels 3,14 (see fig 2), a cooling system may be exceptionally beneficial to their capacity and safety. Furthermore the cooling system may be required to control the temperature of the fuel inside the tanks during rapid pressure changes, related to the thermal dynamics of gaseous fuels (e.g. typically occurring during fast filling and/or discharging).

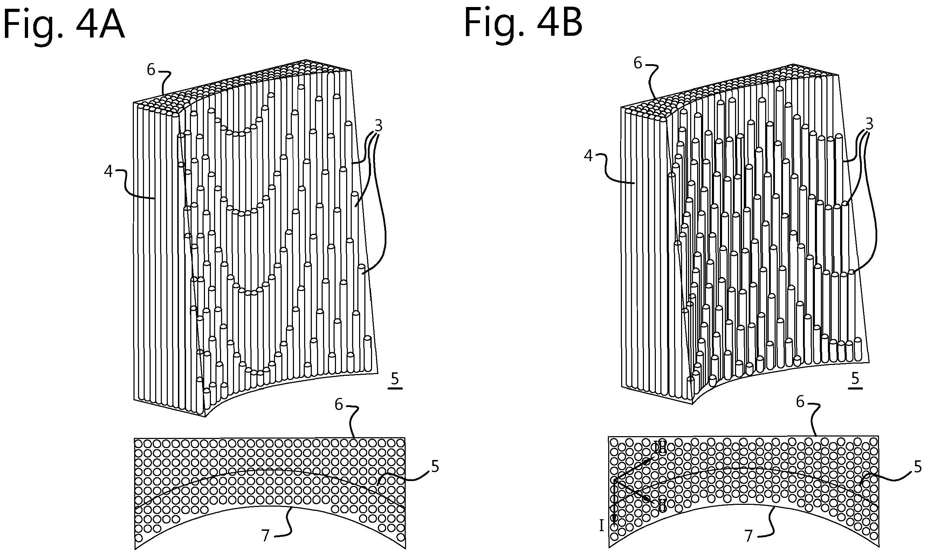

Figures 4 A and B show alternative embodiments wherein the dense pack 4 is formed by packed cylindrical vessels 3 aligned in upward direction of the truck, the cylinder vessels having uniform diameters configured in a rectangular or triangular configuration. Both embodiments A and B are shown in isometric view and top view respectively. Both embodiments have vessels varying in height, in order to provide perimeter 7 to recede with increasing height, to provide for a forward inclination of the semi-trailer relative to the fifth wheel, defined by a pitch degree of freedom, between the semi-trailer and a rear boundary of the cabin, e.g. during a condition of driving over changing road slopes or substantial braking action. The difference between the embodiments is the configuration of the dense pack 4: in Figure 4A, the configuration is rectangular, and in Figure 4B the configuration is triangular. Both configurations may have merits in choosing an optimal form factor for the fuel storage 4, wherein the triangular configuration has a slightly more dense packing than the rectangular configuration. Within a triangular configuration three main axes (see arrows I, II and III in Figure 4B) can be identified which may advantageously be selected to coincide with one of the main (flat) sides of the fuel storage. Depending on diameter, inter-distance and number of cylinders orientation according to one main axes may have beneficial packaging advantages.

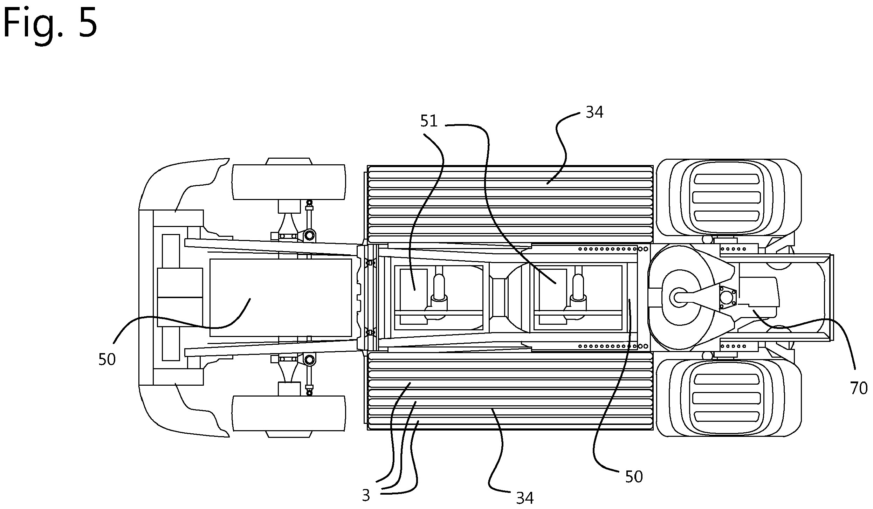

Figure 5 shows a layout of tractor chassis having an elongated dense pack 34 of a plurality of cylindrical pressure vessels placed along the chassis frame members needed for reaching a driving range of more than 800 km or more. The pack 34 is provided in the bottom framework (or chassis) of the tractor, in particular, in a space provided between front and rear wheels and at the outside (in parallel to the longitudinal centreline of the tractor) where normally, in conventional combustion engine driven trucks, the diesel tanks and the exhaust aftertreatment system are installed. A battery pack 50, that realistically weighs about 500 - 1500 kgs, may be placed with its gravity center on or near the front axle to allow for more payload carry ability of the rear axle. Note that in addition to the afore mentioned turning circle requirements also the maximum axle loads are legally bounded (e.g. rear axle 11,5 ton and front axle 7,5 ton as an average indication for European countries). In this sense it is beneficial to preload the front axle as much as possible with the static weight of needed tractor components leaving the rear axle maximally free to carry payload which is an important customer value (profitability of truck ownership). In electrically propelled vehicles the needed battery system is by far the heaviest component to install on the tractor hence the proposal to install the battery system as much as possible to the front of the tractor. The center space in the bottom of the trailer and in the middle between the chassis members may be used for housing fuel cells 51, where, in conventional trucks, central drive shafts or trains need to be housed. In Figure 5 the electric motors that drive the truck may be arranged as a so-called e-axle 70 (having the electric motors directly integrated in the rigid rear axle eliminating the need for a central driveshaft and differential gear system), advantageously making packaging space available to place the fuel cells in the middle of the chassis.

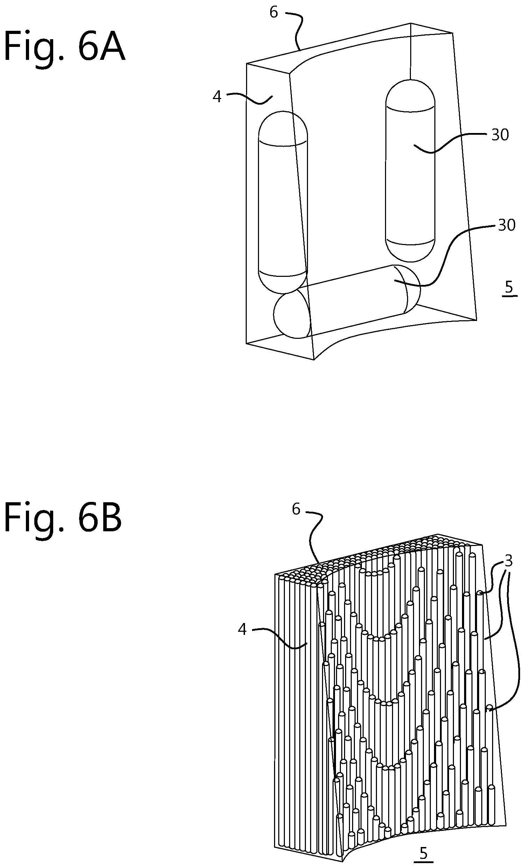

Figure 6A shows an embodiment wherein the available packaging space is packed with conventional cylinders 30; typically thick walled carbon fibre reinforced cylinders having a diameter of about 200 mm or more; in contrast to the fuel storage according to an embodiment of the invention, formed by a dense pack 4 of a plurality of cylinder vessels, the cylinder vessels having uniform diameters configured in a rectangular or triangular configuration. Typical diameters of the cylinder vessels in the dens pack are 150 mm or less. Note that the smaller the diameter, the larger the filling rate of the perimeter confined fuel storage may be. Furthermore, note that the needed wall strength (or thickness) in order to resist the internal pressure is approximately proportional to the applied diameter of the cylinder, so basically no mass penalty is related to maximally filling up the available fuel storage space and using a large amount of cylinders at small diameter size. Keeping practically feasible manufacturing limits in mind, the available storage space according to the embodiment of Figure 6B is used with an efficiency gain of about 100% in comparison to the embodiment of Figure 6A whilst using almost the same amount of carbon fibre material which is the major cost driver in a high pressure fuel storage system. In 6A a realistic amount of hydrogen that can be stored ranges, depending on a use pressure, between 20 and 28 kg H2 (pressures ranging from about 350 to 700 bar); amounting to a driving range extending about 250-350 km. In contrast, the setup of the dense pack 4 allows for a total inner volume ranging almost double: 1300-1800 litres (corresponding to about 40-55 kg H2 at pressures between 350 and 700 bar), extending the driving range to more than 600 km.

In the embodiment of Figure 6B, a typical diameter of a dense pack cylinder vessel 3 may be about 50 - 100 mm, in particular, 70 mm, with wall thickness of about 4-8 mm, depending on used pressures ranging between 350 and 750 bar.

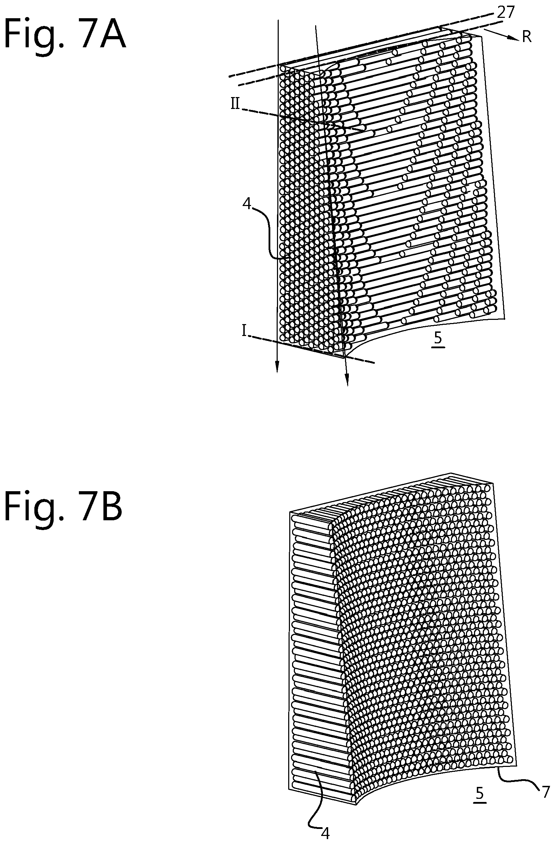

Figures 7A and 7B show two further embodiments of the dense pack 4 , wherein the orientation is along a lateral direction (7A) or a longitudinal direction (7B) of the truck. These configurations may be considered as high filling rate alternatives for the solution as presented in Figure 6B which has a pronounced vertical orientation of the packed cylinders. Accordingly, in Figure 7A, the dense pack 4 is formed by packed cylindrical vessels aligned extending along a lateral direction of the truck and a number of cylindrical vessels diminishes with increasing height, adjusted to the perimeter of said rear side of the pressurized fuel storage. This can be seen in Figure 7A where the number of cylinders aligned in first plane I is larger than the number of cylinders aligned in second plane II that is higher than the first plane I. Advantageously, the cylinders extend laterally between two sides of the truck, except for the parts of the dense pack extending rearwards R from the smallest distance 27, where the cylinders are symmetrically arranged along a longitudinal axis and diminish in length towards the rear.

In Figure 7B, the dense pack 4 is formed by packed cylindrical vessels aligned extending along a longitudinal direction of the truck and the length of cylindrical vessels decreases with increasing height, adjusted to the perimeter of said rear side of the pressurized fuel storage. Conversely to Figure 7A the number of vessels in the remains the same in the different height levels of horizontal planes.

Analogue to Figure 7B, in Figures 4 and 6B, the length of the cylinders allows for the receding perimeter, i.e. a length of the upstanding cylindrical vessels decreases towards the rear side of the pressurized fuel storage, adjusted to the perimeter of said rear side of the pressurized fuel storage.

It is stipulated that the general claims of this invention regarding the placement of pressurized fuel vessels is not only limited to the application of fuel cell electric vehicles. The use of hydrogen or natural gas or biogas or ammonia, etc. is also possible as fuel for application in an (adapted) internal combustion engine. These applications have a similar central drivetrain (engine-gearbox-propeller shaft) as a conventional diesel truck. Even a combination of a hydrogen fuelled internal combustion engine and an electrical drivetrain can be considered. For instance in the form of a so-called series hybrid setup wherein the internal combustion engine drives an electric generator that provides the needed electric current to charge the batteries and/or electric motor that drives the wheels. All these vehicles profit from placing almost upstanding elongated pressure vessels behind the cabin using the perimeter defined clearance zone of the semi-trailer to substantially increase the driving range in addition to the dense pack of spherocylindrical pressure vessels placed left and right of the chassis members and in between the front and rear axle.

With dense pack, it is not excluded that the cylinders allow for a small spacing, e.g. to comply with mechanical connections and wrapping arrangement, e.g. for cooling or impact protection. Spacing between the vessels may be about 0.1-20 mm, e.g. 15 mm. Furthermore, while a dense pack may have a predominant alignment, as illustrated in the figures, it is not excluded that one or more additional pressure vessels are oriented in different orientations from the dense pack of cylinder vessels, to shape said pressurized fuel storage to conform to said rear side of said pressurized fuel storage. For instance, e.g. depending on the form factor of the fuel storage, clusters of packs can be formed, each pack having a predominant alignment direction, where e.g. the triangular or rectangular orientations of the configuration are coplanar with a side of the fuel storage.

## Claims

1. A truck or tractor semi-trailer combination (1) interconnected via a fifth wheel (9), comprising a cabin (2) and a pressurized fuel storage (5), situated between a rear end of the cabin and the semi-trailer (10), wherein the pressurized fuel storage (5) is formed by a pack (4) of a plurality of cylinder vessels (3), the cylinder vessels (3) having uniform diameters configured in a rectangular or triangular configuration, the fuel storage (5) extending in height above the fifth wheel (9), wherein the pressurized fuel storage (5) is confined by the rear boundary of the cabin (2) and a rear side of the storage (5), **characterized in that** the fuel pressurized storage (5) is formed by a dense pack (4) of a contiguously packed plurality of cylinder vessels (3), and **in that** the rear side of the storage (5) has a perimeter (7) that recedes with increasing height, to provide for a forward inclination of the semi-trailer (10) relative to the fifth wheel (9), defined by a pitch degree of freedom, between the semi-trailer (10) and a rear boundary (6) of the cabin.

2. A truck or tractor semi-trailer combination to claim 1, wherein the pressurized fuel storage (5) has a largest length dimension (29) along a length direction of the truck or tractor semi-trailer combination (1), that is larger than a smallest distance (27), defined by the rotational yaw degree of freedom, between the semi-trailer (10) and a rear boundary (6) of the cabin.

3. A truck or tractor semi-trailer combination to claim 1, wherein the dense pack (4) is formed by packed cylindrical vessels (3) aligned extending along a lateral direction of the truck (1); wherein a number of cylindrical vessels (3) diminishes with increasing height, adjusted to the perimeter (7) of said rear side of the pressurized fuel storage (5).

4. A truck or tractor semi-trailer combination to claim 1, wherein the dense pack (4) is formed by packed cylindrical vessels (3) aligned in upward direction of the truck (1); wherein a height of the cylindrical vessels (3) decreases towards the rear side of the pressurized fuel storage (5), adjusted to the perimeter (7) of said rear side of the pressurized fuel storage (5).

5. A truck or tractor semi-trailer combination to claim 1, wherein the dense pack (4) is formed by packed cylindrical vessels (3) aligned along a longitudinal direction of the truck (1); wherein a length of the cylindrical vessels (3) decreases with increasing height towards the rear side of the pressurized fuel storage (5), adjusted to the perimeter (7) of said rear side of the pressurized fuel storage (5).

6. A truck or tractor semi-trailer combination according to any previous claims, wherein one or more additional pressure vessels are oriented in different orientations from the dense pack (4) of cylinder vessels (3), to shape said pressurized fuel storage (5) to conform to said rear side of said pressurized fuel storage (5).

7. A truck or tractor semi-trailer combination according to any previous claims, wherein said perimeter (7) of said rear side of the pressurized fuel storage (5) follows a radius (8) defined by a corner end (12) of a semi-trailer (10) measured from the fifth wheel (9), said perimeter (7) allowing the semi-trailer (10) to turn relative to the fifth wheel (9) in a horizontal plane.

8. A truck or tractor semi-trailer combination according to claim 7, wherein the radius (8) is larger than a spanning distance between the fifth wheel (9) and a front corner (12) of the semi-trailer (10) of the truck.

9. A truck or tractor semi-trailer combination according to any previous claim, wherein the pressurized fuel storage (5) is provided in a storage compartment (17)
, wherein the storage compartment (17) is formed by panels (18, 19, 20) along any outer surface of a truck.

10. A truck or tractor semi-trailer combination according to any previous claim, wherein the pressurized fuel storage (5) comprises an impact energy absorption layer surrounding at least one of the cylinders in the dense pack (4) of cylinder vessels (3) for absorbing impact energy during a collision of the truck.

11. A truck or tractor semi-trailer combination according to any previous claim, wherein the pressurized fuel storage (5) comprises cooling means (27, 28) for cooling fuel stored in the dense pack (4) of cylinder vessels (3).

12. A truck or tractor semi-trailer combination according to any previous claim, further comprising at least one fuel cell (51), an electrical driveline (70) and an electric energy storage battery system (50).

13. A truck or tractor semi-trailer combination according to claim 12, wherein the electric energy storage battery system (50) is positioned at or near a truck's front axle.

14. A truck or tractor semi-trailer combination (1) according to any previous claim, having one or more additional horizontal elongated pressure vessels (3) placed along the chassis frame members.

15. A truck or tractor semi-trailer combination (1) according to claim 14, wherein the additional horizontal elongated pressure vessels (3) are formed by a dense pack (34) of a plurality of cylinder vessels, having uniform diameters configured in a rectangular or triangular configuration.

## Patentansprüche

1. Lkw oder Sattelzugmaschine mit Auflieger (1), die über eine Sattelkupplung (9) miteinander verbunden ist, umfassend eine Kabine (2) und einen Kraftstoffdruckspeicher (5), der sich zwischen einem hinteren Ende der Kabine und dem Sattelauflieger (10) befindet, wobei der Kraftstoffdruckspeicher (5) durch ein Paket (4) aus einer Vielzahl von Zylinderbehältern (3) gebildet wird, wobei die Zylinderbehälter (3) einheitliche Durchmesser aufweisen, die in einer rechteckigen oder dreieckigen Konfiguration konfiguriert sind, wobei sich der Kraftstoffspeicher (5) in Höhe über die Sattelkupplung (9) erstreckt, wobei der Kraftstoffdruckspeicher (5) durch die hintere Begrenzung der Kabine (2) und eine Rückseite des Speichers (5) begrenzt ist, **dadurch gekennzeichnet, dass**
der Kraftstoffdruckspeicher (5) durch ein dichtes Paket (4) aus einer zusammenhängend gepackten Vielzahl von Zylinderbehältern (3) gebildet ist, und dass die Rückseite des Speichers (5) einen Umfang (7) aufweist, der mit zunehmender Höhe abnimmt, um eine durch einen Neigungsfreiheitsgrad definierte Vorwärtsneigung des Sattelaufliegers (10) relativ zu der Sattelkupplung (9) zwischen dem Sattelauflieger (10) und einer hinteren Begrenzung (6) der Kabine bereitzustellen.

2. Lkw oder Sattelzugmaschine mit Auflieger nach Anspruch 1, wobei der Kraftstoffdruckspeicher (5) eine größte Längenabmessung (29) entlang einer Längsrichtung der Lkw oder Sattelzugmaschine mit Auflieger (1) aufweist, die größer ist als ein kleinster Abstand (27), definiert durch den Dreh-Gier-Freiheitsgrad, zwischen dem Sattelauflieger (10) und einer hinteren Begrenzung (6) der Kabine.

3. Lkw oder Sattelzugmaschine mit Auflieger nach Anspruch 1, wobei das dichte Paket (4) aus gepackten Zylinderbehältern (3) gebildet ist, die entlang einer seitlichen Richtung des LKWs (1) ausgerichtet sind; wobei eine Anzahl von Zylinderbehältern (3) mit zunehmender Höhe abnimmt, angepasst an den Umfang (7) der Rückseite des Druckkraftstoffspeichers (5).

4. Lkw oder Sattelzugmaschine mit Auflieger nach Anspruch 1, wobei das dichte Paket (4) aus gepackten Zylinderbehältern (3) gebildet ist, die in Aufwärtsrichtung des LKWs (1) ausgerichtet sind; wobei eine Höhe der Zylinderbehälter (3) in Richtung der Rückseite des Druckkraftstoffspeichers (5) abnimmt, angepasst an den Umfang (7) der Rückseite des Druckkraftstoffspeichers (5).

5. Lkw oder Sattelzugmaschine mit Auflieger nach Anspruch 1, wobei das dichte Paket (4) aus gepackten Zylinderbehältern (3) gebildet ist, die entlang einer Längsrichtung des LKWs (1) ausgerichtet sind; wobei eine Länge der Zylinderbehälter (3) mit zunehmender Höhe in Richtung der Rückseite des Druckkraftstoffspeichers (5), angepasst an den Umfang (7) der Rückseite des Druckkraftstoffspeichers (5), abnimmt.

6. Lkw oder Sattelzugmaschine mit Auflieger nach einem der vorstehenden Ansprüche, wobei ein oder mehrere zusätzliche Druckbehälter in unterschiedlichen Ausrichtungen zu dem dichten Paket (4) von Zylinderbehältern (3) ausgerichtet sind, um den Druckkraftstoffspeicher (5) so zu formen, dass er sich an die Rückseite des Druckkraftstoffspeichers (5) anpasst.

7. Lkw oder Sattelzugmaschine mit Auflieger nach einem der vorstehenden Ansprüche, wobei der Umfang (7) der Rückseite des Druckkraftstoffspeichers (5) einem Radius (8) folgt, der durch ein von der Sattelkupplung (9) aus gemessenes Eckende (12) eines Sattelaufliegers (10) definiert ist, wobei der Umfang (7) eine Drehung des Sattelaufliegers (10) relativ zu der Sattelkupplung (9) in einer horizontalen Ebene ermöglicht.

8. Lkw oder Sattelzugmaschine mit Auflieger nach Anspruch 7, wobei der Radius (8) größer ist als der Abstand zwischen der Sattelkupplung (9) und einer vorderen Ecke (12) des Sattelaufliegers (10) des LKWs.

9. Lkw oder Sattelzugmaschine mit Auflieger nach einem der vorstehenden Ansprüche, wobei der Druckkraftstoffspeicher (5) in einem Speicherfach (17) vorgesehen ist, wobei das Speicherfach (17) durch Platten (18, 19, 20) entlang einer beliebigen Außenfläche eines LKWs gebildet ist.

10. Lkw oder Sattelzugmaschine mit Auflieger nach einem der vorstehenden Ansprüche, wobei der Druckkraftstoffspeicher (5) eine Aufprallenergie-Absorptionsschicht umfasst, die mindestens einen der Zylinder in dem dichten Paket (4) von Zylinderbehältern (3) umgibt, um Aufprallenergie während eines Aufpralls des LKWs zu absorbieren.

11. Lkw oder Sattelzugmaschine mit Auflieger nach einem der vorstehenden Ansprüche, wobei der Druckkraftstoffspeicher (5) Kühlmittel (27, 28) zum Kühlen des in dem dichten Paket (4) von Zylinderbehältern (3) gespeicherten Kraftstoffs umfasst.

12. Lkw oder Sattelzugmaschine mit Auflieger nach einem der vorstehenden Ansprüche, ferner umfassend mindestens eine Brennstoffzelle (51), einen elektrischen Antriebsstrang (70) und ein elektrisches Energiespeicherbatteriesystem (50).

13. Lkw oder Sattelzugmaschine mit Auflieger nach Anspruch 12, wobei das elektrische Energiespeicherbatteriesystem (50) an oder in der Nähe der Vorderachse des LKWs angeordnet ist.

14. Lkw oder Sattelzugmaschine mit Auflieger (1) nach einem der vorstehenden Ansprüche mit einem oder mehreren zusätzlichen horizontalen, länglichen Druckbehältern (3), die entlang der Fahrgestellrahmenelemente angeordnet sind.

15. Lkw oder Sattelzugmaschine mit Auflieger (1) nach Anspruch 14, wobei die zusätzlichen horizontalen, länglichen Druckbehälter (3) durch ein dichtes Paket (34) aus einer Vielzahl von Zylinderbehältern gebildet sind, die einheitliche Durchmesser aufweisen und in einer rechteckigen oder dreieckigen Konfiguration konfiguriert sind.

## Revendications

1. Camion ou combinaison de tracteur et semi-remorque (1) interconnecté via une cinquième roue (9), comprenant une cabine (2) et un stockage de carburant sous pression (5) situé entre une extrémité arrière de la cabine et la semi-remorque (10), dans lequel le stockage de carburant sous pression (5) est formé par un bloc (4) d'une pluralité de réservoirs cylindriques (3), les réservoirs cylindriques (3) ayant des diamètres uniformes configurés selon une configuration rectangulaire ou triangulaire, le stockage de carburant (5) s'étendant en hauteur au-dessus de la cinquième roue (9), dans lequel le stockage de carburant sous pression (5) est confiné par la limite arrière de la cabine (2) et un côté arrière du stockage (5), **caractérisé en ce que** le stockage de carburant sous pression (5) est formé par un bloc dense (4) d'une pluralité emballée de manière contiguë de réservoirs cylindriques (3) et **en ce que** le côté arrière du stockage (5) a un périmètre (7) qui recule avec la hauteur croissante, pour fournir une inclinaison vers l'avant de la semi-remorque (10) par rapport à la cinquième roue (9), définie par un degré de liberté de pas, entre la semi-remorque (10) et une limite arrière (6) de la cabine.

2. Camion ou combinaison de tracteur et semi-remorque selon la revendication 1, dans lequel le stockage de carburant sous pression (5) a la plus grande dimension de longueur (29) le long d'une direction de longueur du camion ou de la combinaison de tracteur et semi-remorque (1), qui est supérieure à la plus petite distance (27) définie par le degré de liberté de lacet de rotation entre la semi-remorque (10) et une limite arrière (6) de la cabine.

3. Camion ou combinaison de tracteur et semi-remorque selon la revendication 1, dans lequel le bloc dense (4) est formé par des réservoirs cylindriques (3) emballés alignés, s'étendant le long d'une direction latérale du camion (1) ; dans lequel un nombre de réservoirs cylindriques (3) diminue avec la hauteur croissante, ajustée par rapport au périmètre (7) dudit côté arrière du stockage de carburant sous pression (5).

4. Camion ou combinaison de tracteur et semi-remorque selon la revendication 1, dans lequel le bloc dense (4) est formé par des réservoirs cylindriques (3) emballés alignés dans la direction ascendante du camion (1) ; dans lequel une hauteur des réservoirs cylindriques (3) diminue vers le côté arrière du stockage de carburant sous pression (5), ajustée par rapport au périmètre (7) dudit côté arrière du stockage de carburant sous pression (5).

5. Camion ou combinaison de tracteur et semi-remorque selon la revendication 1, dans lequel le bloc dense (4) est formé par les réservoirs cylindriques (3) emballés alignés le long d'une direction longitudinale du camion (1) ; dans lequel une longueur des réservoirs cylindriques (3) diminue avec la hauteur croissante vers le côté arrière du stockage de carburant sous pression (5), ajustée par rapport au périmètre (7) dudit côté arrière du stockage de carburant sous pression (5).

6. Camion ou combinaison de tracteur et semi-remorque selon l'une quelconque des revendications précédentes, dans lequel un ou plusieurs réservoirs sous pression supplémentaires sont orientés dans différentes orientations à partir du bloc dense (4) de réservoirs cylindriques (3), pour former ledit stockage de carburant sous pression (5) pour qu'il se conforme audit côté arrière dudit stockage de carburant sous pression (5).

7. Camion ou combinaison de tracteur et semi-remorque selon l'une quelconque des revendications précédentes, dans lequel ledit périmètre (7) dudit côté arrière du stockage de carburant sous pression (5) suit un rayon (8) défini par une extrémité de coin (12) d'une semi-remorque (10) mesurée à partir de la cinquième roue (9), ledit périmètre (7) permettant à la semi-remorque (10) de tourner par rapport à la cinquième roue (9) dans un plan horizontal.

8. Camion ou combinaison de tracteur et semi-remorque selon la revendication 7, dans lequel le rayon (8) est supérieur à une distance de couverture entre la cinquième roue (9) et un coin avant (12) de la semi-remorque (10) du camion.

9. Camion ou combinaison de tracteur et semi-remorque selon l'une quelconque des revendications précédentes, dans lequel le stockage de carburant sous pression (5) est prévu dans un compartiment de stockage (17), dans lequel le compartiment de stockage (17) est formé par des panneaux (18, 19, 20) le long de l'une quelconque des surfaces externes d'un camion.

10. Camion ou combinaison de tracteur et semi-remorque selon l'une quelconque des revendications précédentes, dans lequel le stockage de carburant sous pression (5) comprend une couche d'absorption d'énergie d'impact entourant au moins l'un des cylindres dans le bloc dense (4) de réservoirs cylindriques (3) pour absorber l'énergie d'impact pendant une collision du camion.

11. Camion ou combinaison de tracteur et semi-remorque selon l'une quelconque des revendications précédentes, dans lequel le stockage de carburant sous pression (5) comprend un moyen de refroidissement (27, 28) pour refroidir le carburant stocké dans le bloc dense (4) de réservoirs cylindriques (3).

12. Camion ou combinaison de tracteur et semi-remorque selon l'une quelconque des revendications précédentes, comprenant en outre au moins une pile à combustible (51), une transmission électrique (70) et un système de batterie de stockage d'énergie électrique (50).

13. Camion ou combinaison de tracteur et semi-remorque selon la revendication 12, dans lequel le système de batterie de stockage d'énergie électrique (50) est positionné au niveau de ou à côté d'un essieu avant du camion.

14. Camion ou combinaison de tracteur et semi-remorque (1) selon l'une quelconque des revendications précédentes, ayant un ou plusieurs réservoirs sous pression (3) allongés horizontaux supplémentaires placés le long des éléments de cadre de châssis.

15. Camion ou combinaison de tracteur et semi-remorque (1) selon la revendication 14, dans lequel les réservoirs sous pression (3) allongés horizontaux supplémentaires sont formés par un bloc dense (34) d'une pluralité de réservoirs cylindriques, ayant des diamètres uniformes configurés selon une configuration rectangulaire ou triangulaire.
